# EUROPEAN PATENT SPECIFICATION

(11) **EP 2 754 208 B1**
(45) Date of publication and mention of the grant of the patent: **17.01.2018**
(21) Application number: 12775533.8
(22) Date of filing: 07.09.2012
(51) Int. Cl.: H01R 13/453, H01R 24/78, H01R 13/66, H01R 13/703, H01R 27/00

(54) **ELECTRICAL SOCKET**
ELEKTRISCHE STECKDOSE
SUPPORT ÉLECTRIQUE

(30) Priority: 09.09.2011 GB 201115632
(43) Date of publication of application: 16.07.2014
(73) Proprietor: IFPL Group Limited, Calbourne, Isle of Wight PO30 4JY (GB)
(72) Inventor: UNDERWOOD, Geoffrey Paul, Calbourne Newport Isle of Wight PO30 4JY (GB); THOMPSON, Mark, Calbourne Newport Isle of Wight PO30 4JY (GB)
(74) Representative: Robinson, Simon John
(86) International application number: PCT/GB2012/052212
(87) International publication number: WO 2013/034928

(56) References cited:
- EP-A2- 0 615 313
- WO-A2-2007/030606
- US-A- 5 006 075
- US-A1- 2003 017 731
- US-B1- 6 224 401
- US-B1- 6 776 630
- US-B1- 6 786 745
- US-B1- 7 588 447

## Description

### Technical Field

The present invention relates to electrical sockets.

### Background

Electrical sockets are known which enable the insertion of a plug in order to connect an electrical device to a power supply. In particular, although not exclusively, in relation to passenger transportation, we have devised an improved electrical socket.

In the prior art, a safety shutter is disclosed in EP 0 615 313 in which a unitary rigid shutter piece occludes multiple pin apertures. Both pins of a plug must be inserted into a socket, against the shutter piece in order for the shutter piece to be pushed clear. The prior art also discloses safety shutter arrangements, such as those in US 5 006 075 and US 7 588 447 in which multiple shutter pieces are arranged to be slidably displaceable in opposing directions in order to allow admittance of pins of an electrical plug.

### Summary

According to the invention there is provided an electrical socket comprising a carriage, the carriage comprising shutter portions, each shutter portion associated with a respective pin receiving opening, and the socket comprising a retainer arrangement, and the shutter portions, when in a closed condition are inhibited from moving to an open condition by the retainer arrangement, and wherein all the shutter portions are required to be in a released condition from the retainer arrangement in order to allow the shutter portions to be moved to an open condition to allow the plug pins to be inserted therein, and also wherein, if not all of the shutter portions are moved to a released condition, the shutter portions are inhibited from movement to the open condition by way of engagement with the retainer arrangement, wherein each shutter portion is displaceable in a first direction to the released condition, which direction is substantially perpendicular to a second direction in which each shutter portion is displaceable to the open condition, and in which the carriage comprises a connection piece which connects the shutter portions together, and the connection piece has flexibility in the first direction to allow the shutter portions to move to the released condition independently of one another.

The retainer arrangement may comprise a respective retainer surface for each shutter portion. In order to adopt a released condition, each shutter portion is required to be moved clear of its respective retainer surface.

The first direction may be substantially parallel to the direction to which a plug pin is insertable into its opening.

The carriage may comprise a connection piece which connects the shutter portions together.

The connection piece has flexibility in the first direction to allow the shutter portions to move to the released condition independently of one another.

Each shutter portion may comprise inclined surfaces arranged to contact with respective distal ends of plug pins.

The socket may comprise a resilient biasing arrangement to urge the shutter portion towards the closed condition.

The socket may be arranged for use in a vehicle, such as in an aircraft cabin, in a train or in a bus/coach, but other uses can equally be envisaged.

The retainer arrangement preferably comprises a catch which is immovable with the socket housing.

In a closed condition, the shutter portions preferably inhibit ingress of liquid towards the electrical terminals of the socket.

The socket may be arranged to receive different pin configurations of different plug types. For example, the socket may be capable of receiving the following plug types:
NEMA 1-15- two pin- USA and Japan
NEMA 5-15- three pin- USA
CEE 7/16- two pin- Europe
CEE 7/17- two pin- Europe
BS546- three pin- Kuwait/Qatar
CEE 7/5- two pin- Poland/France/Belgium
CEE 7/4- two pin-Europe
CEE 7/7- Two pin- France/Germany
BS1363- three pin- UK/Ireland/Singapore/Malaysia
SI32- three pin- Israel
AS-3112- three pin- Argentina/Australia/New Zealand
SEV-1011- three pin- Switzerland
SRAF1962/DB- Denmark
CEI23-16- Chile/Italy
BS546- India/South Africa/Pakistan/Hong Kong

Openings (for receipt of plug pins) are preferably dimensioned to receive plug pins of different sizes, shapes, configurations and spacings, corresponding to different plug types, and the internal electrical terminals arranged to be brought into electrical contact with the pins of the different plug types. Preferably, the socket arranged to receive both two and three pin plugs. Preferably, the socket comprises three enlarged openings, two of which arranged to receive live plug pins, and a third enlarged opening for a ground pin.

An electrical plug socket as disclosed herein advantageously provides a high level of safety to users.

### Brief description of the drawings

Various embodiments of the invention will now be described, by way of example only, with reference to the following drawings in which:
**Figure 1** is a perspective view of an electrical plug socket,
**Figure 2** is a perspective view of a shutter carriage of an electrical plug socket,
**Figure 3** is a side view of the shutter carriage of Figure 2,
**Figure 4** is an end view the shutter carriage of Figures 2 and 3,
**Figure 5** is a section on A-A of the shutter carriage of Figure 4,
**Figure 6** is an enlarged view of a portion of the shutter carriage of Figure 5,
**Figure 7** is a front elevation of the electrical plug socket of Figure 1,
**Figure 8** is a section on C-C of the socket shown in Figure 7,
**Figure 9** is a section on D-D of the socket shown in Figure 7,
**Figure 10** is a plan view of the shutter carriage of Figure 2,
**Figure 11** is a further plan view of the shutter carriage of Figure 2,
**Figure 12** is an internal view of the socket of Figure 1,
**Figure 13** is an internal view of the socket of Figure 1,
**Figure 14** is an internal view of the socket of Figure 1,
**Figure 15** is circuit block diagram of a control circuit of the socket of Figure 1, and
**Figure 16** is a logic table related to the functionality implemented by the control circuit of Figure 15.

### Detailed Description

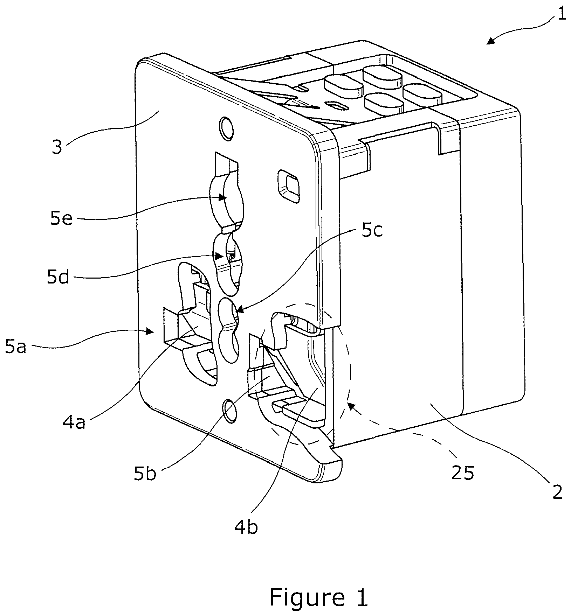

Reference is made initially to Figure 1 which shows an electrical plug socket 1, or power outlet, comprising a housing 2, a frontal face 3 and a shutter carriage 4, which is contained with the housing 2. The socket comprises electrical terminals for electrical contact with pins of a plug insertable into the socket 1, the plug being connected to an electrically powered apparatus/device. As will be described below, the socket 1 is advantageously such that power is only supplied to the plug if the plug is correctly inserted into the socket 1.

The housing 2 comprises fixing formations, such as a releasable (resilient) clip and/or through-holes for screw fixings, to allow the socket to be attached to a supporting structure such as a building, a wall, a vehicle or equipment. The socket is preferably made of a flame retardant insulate plastic, with the shutter carriage preferably made of polyetherimide.

The frontal face 3 of the socket 1 further comprises pin receiving openings 5a, 5b, 5c, 5d and 5e. Reference is made in particular to the openings 5a and 5b which lead to respective pin receiving spaces which contain respective electrical terminals. Each opening 5a and 5b is arranged to receive a respective pin of the plug. The openings 5a and 5b serve as openings for receipt of the 'live' pins of a plug, and the openings 5c, 5d and 5e serve as openings for ground connections.

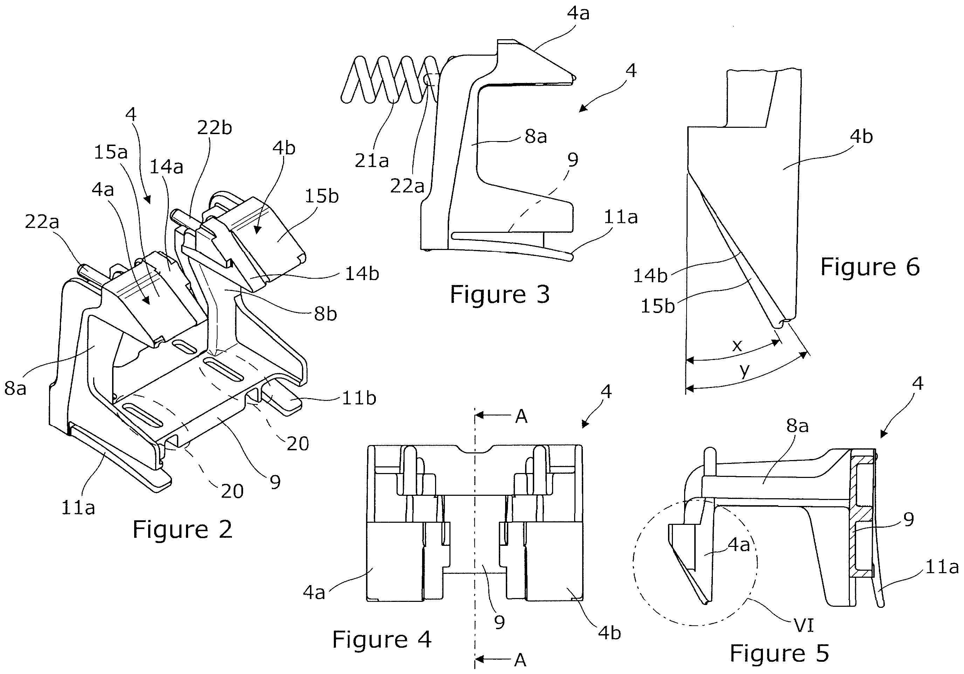

Without any plug inserted into the socket, access to the respective pin receiving spaces is blocked by shutters 4a and 4b of the shutter carriage. (It will be appreciated that the view shown in Figure 1 shows a cutaway section 25 which is included for illustration purposes only, and would not be present in the actual socket 1.) With reference now to Figure 2, features of the shutter carriage are now described. The shutter carriage 4 comprises the two shutters 4a and 4b, each provided on a respective limb 8a and 8b, respectively. The limbs 8a and 8b stand up from a connector piece 9, which connects the two limbs. Each shutter 4a and 4b is provided with a double inclined surface in which two adjacent inclined surfaces 14a and 15a, and, 14b and 15b, are provided. As can be seen in Figure 6, each surface is set a different incline. For example, the surface 14b may be an angle (to the vertical) of 35 degrees (as indicated by angle y), whereas, the inclined surface 15b may be at an angle of 30 degrees (as indicated by angle x). Each of the inclined surfaces is arranged to engage with a distal end of a respective plug pin during insertion of the plug into the socket.

Rearwardly of each of the shutters, and behind the connector piece 9, there is provided a leaf spring 11a and 11b which is arranged engage with a rear wall of the housing 2 of the socket 1 so as to urge the respective shutter towards the respective opening.

Towards the junction between each limb and the connector piece, the connector piece comprises a weakened portion 20 which, as will be described below, independent rearward movement of one shutter, independently of the other.

An upper surface of the shutter carriage 4 is provided with return springs 21a and 21b, one above each shutter. The springs are located by respective posts 22a and 22b, at one end, and are located at the opposite ends thereof by suitable formations provided in a roof portion of the housing 2. In use, the springs 21 serve to urge the carriage 4, and therefore the shutters, downwardly towards the base of the housing 2, and in particular, towards the shutters being in the closed condition.

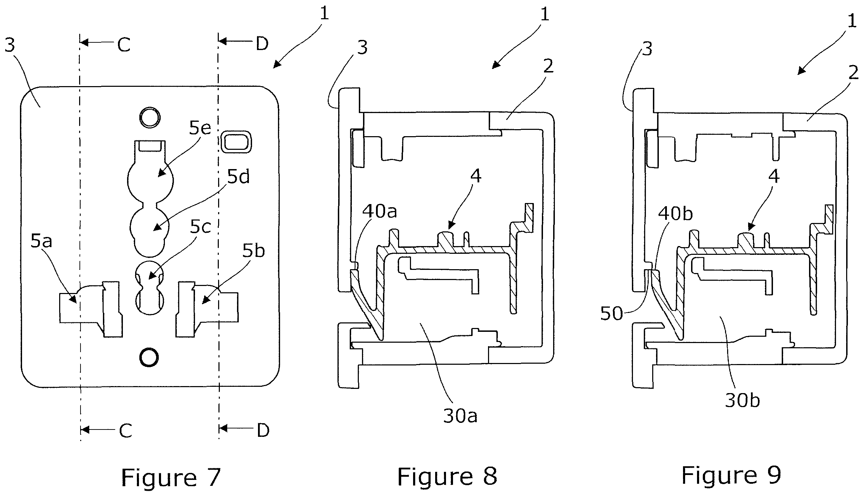

Reference is now made to Figures 7, 8 and 9 to describe the feature of the socket that the pins of the plug must be inserted into both openings 5a and 5b in order to allow the pins to enter pin-receiving spaces 30a and 30b, and thereby make contact with the electrical terminals. In the closed condition, in which the shutters block access to the pin-receiving spaces, an upper surface of each shutter, is located below a respective retainer surface 50, which serves as a catch which extends into the interior space of the housing. In this condition, the retainer surface 50 prevents the shutters from moving upwardly to open the openings.

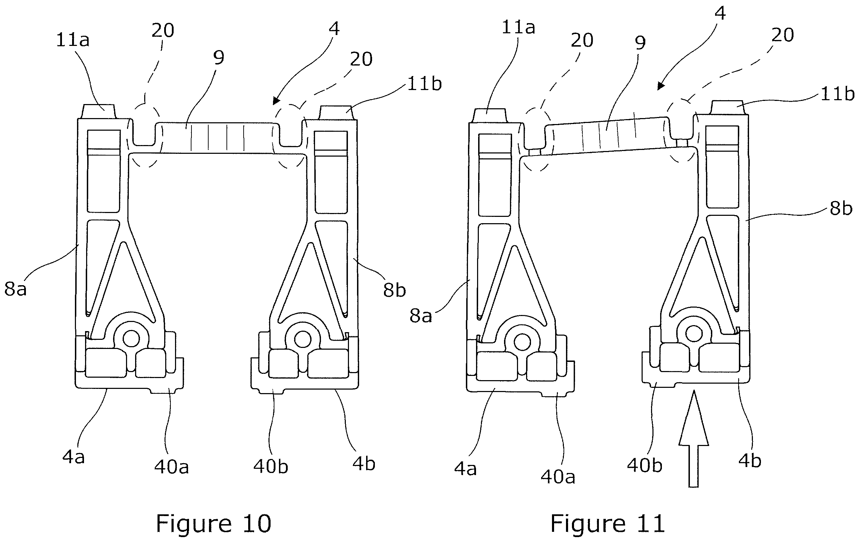

Figure 10 shows the shutter carriage in the closed condition. Should a user urge an object, such as a foreign object or incorrectly attempt to urge a single plug pin into one pin receiving space only, neither shutter will be moved to the open condition. In the example illustrated, as best seen in Figure 11, a user applies a force to the shutter 4b, but not to the shutter 4a, the shutter 4b (and the associated limb 8a) will be moved rearwardly away from the opening 5a. As can be seen in Figures 8 and 9, the surface 40b of the shutter 4b is moved clear of the retainer surface 50, whereas the surface 40a of the shutter 4a remains underneath the retainer surface 50. As best seen in Figure 11, due to the weakened portions 20 in the connector piece 9, only the limb 8b moves, whereas the limb 8a remains in position. Because the limb 8a (and therefore the surface 40a) is not displaced, the carriage as a whole cannot to moved from the closed position, despite the resultant upward force applied to the shutter carriage 4 caused by the force applied by the user to the shutter 4a.

In the situation that a plug is correctly inserted into the openings of the socket 1, a respective pin is urged against both the shutter 4a and the shutter 4b and the respective surfaces 40 are both urged clear of the respective portions of the retainer surface 50. This means that on continued application of force to the shutters by the plug pins, the leaf springs 11a and 11b, are urged against the rear wall of the housing 2, and the inclined surfaces 14a/15a and 14b/15b of the shutters create an upward force being applied to the carriage so as to urge the shutter carriage upwardly and the shutters being urged away from their respective openings towards an open condition.

On the plug pins entering the pin-receiving spaces 30a and 30b, the pins contact with the respective electrical terminals therein. The terminals are of the type which are resiliently biased inwardly of the pin-receiving spaces such that each plug pin has to deflect the terminal in order for the pin to be correctly received within the respective space. This then ensures that the terminal is resiliently biased against the plug pin to ensure electrical contact between the pin and the terminal. With the pins in the 'home' position, the shutter carriage is prevented from returning to the closed position. However, when the user removes the plug from the socket, the return springs 21 and the leaf springs 11, will resiliently urge the shutters to the closed condition.

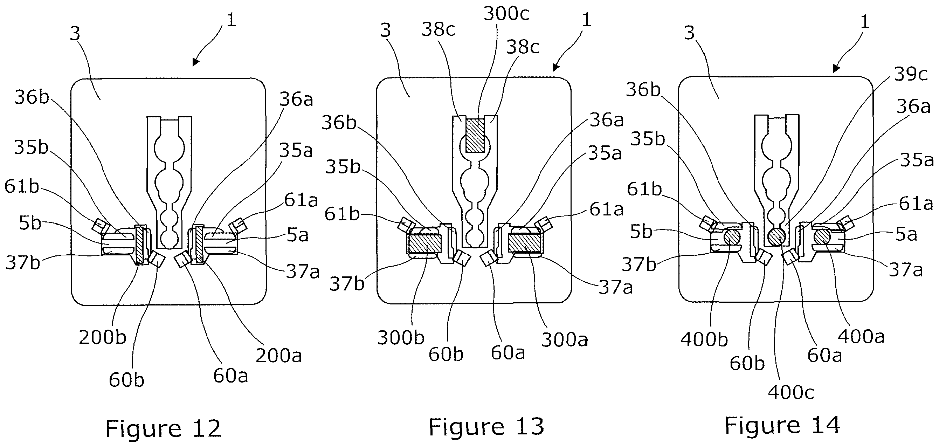

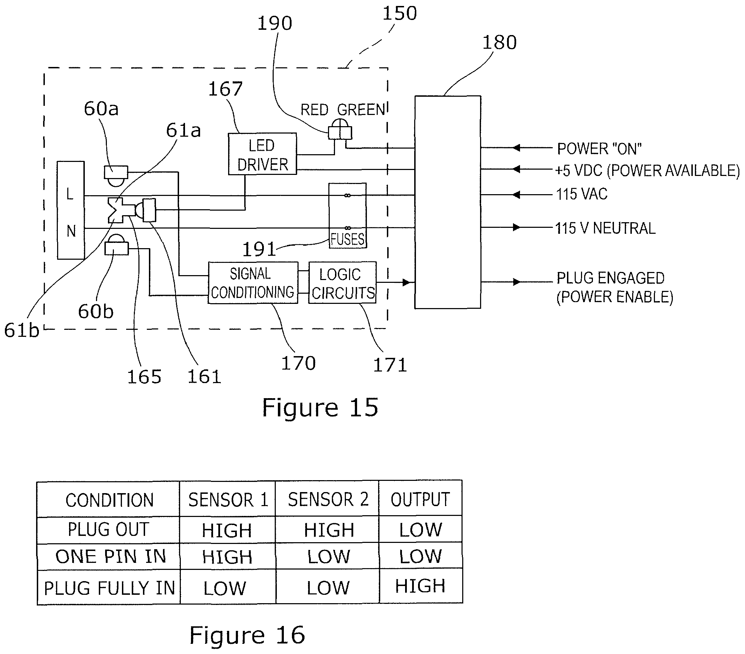

As will be described below, the socket 1 not forming part of the invention may comprise a sensor arrangement to determine when both pins are in the respective home positions, and on such determination, to connect the electrical terminals to a power supply. Reference is made to Figure 12, which shows an internal view (ie from within the socket 1 towards the openings) of such a sensor arrangement which comprises an infrared emitter 60a and an infrared detector 61a, with a line of sight extending through the pin receiving space 30a, and the sensor arrangement comprising an infrared emitter 60b and an infrared detector 61b, with a line of sight extending through the pin-receiving space 30b. The sensor arrangement is located rearwardly of the socket 1. As can be seen from the circuit of Figure 15, each of the emitters 61a and 61b, is powered by an infrared LED 161 which emits radiation into a light guide 165, which suitably reflects and guides the received radiation to generate emitted radiation for each emitter. The emitter/detector pair 60a and 61a are associated with live pin terminals and the emitter/detector pair 60b and 61b are associated with neutral pin terminals. The circuit includes an LED driver 167 which powers the LED 161. Signals from the detectors 60a and 60b are received by a signal conditioner 170 in which conditioned signals are sent to a logic circuitry 171.

The socket 1 further includes a power interface 180 which is connected to the circuit 150. The interface includes a switch to selectively connect and disconnect a power supply to the live and neutral terminals of the socket 1, dependent on whether the logic circuitry 171 determines that both pins are correctly and fully inserted into their respective pin-receiving spaces.

The logic circuitry 171 determines an output according to the logic table shown in Figure 16, in which 'Sensor 1' and 'Sensor 2' are indicative of the detectors 60a and 60b respectively. When the output is HIGH, a signal is sent to the switch of the interface 180 to connect the power supply to the terminals, otherwise, the switch has a default condition of disconnecting the power supply to the terminals.

The circuit 150 also comprises fuses 191, with one fuse for each of the live and neutral terminals.

The circuit further comprises a status indicator 190, which is illuminated green when the power supply is connected, otherwise it is illuminates red. The indicator is connected to both the LED driver 167 and to the interface 180 (and in particular is responsive to the status of the switch within the interface 180). It will be appreciated that the voltage values given in Figure 15 are by way of example only.

Returning to Figure 12, the socket 1 comprises three resiliently biased electrical terminals (of the type mentioned above) associated with each of the pin-receiving spaces 30a and 30b, namely terminals 35a, 36a and 37a associated with the pin-receiving space 30a, and the terminals 35b, 36b and 37b associated with the pin-receiving space 30b. In Figure 12, two pins 200a and 200b are inserted into the pin-receiving spaces 30a and 30b respectively. The pins are in electrical contact with the terminals 36a and 36b respectively. In this example, the pins are attached to a plug of the type NEMA (National Electrical Manufacturers Association) wherein the pins are in the form of two blades. The distal end portions of each pin are such as to block the radiation emitted from the emitters from reaching the associated detectors. This will result in the signal emitted from each detector as being LOW, and therefore, the power supply is connected to the pins in accordance with the predetermined logic condition. When the plug is removed from the socket 1, the radiation will again reach the detectors and so a HIGH signal is sent from each detector to the logic circuitry 171. In that instance, the output signal from the logic circuitry is operative to cause the switch in the interface 180 to disconnect the power supply.

Figure 13 shows a different type inserted into the socket 1. In this instance, the plug is of a three pin type used in the United Kingdom, comprising three pins 300a, 300b and 300c. The pins 300a and 300b, once inserted into the socket, are in electrical connection with the electrical terminals 37a and 37b. Similarly as above, the presence of the pins blocks radiation from reaching the associated detectors and so the power supply is connected to the terminals. A third pin 300c, is in electrical connection with a pair of electrical terminals 38c, which serve as an earthing connection for the pin 300c.

Figure 14 shows a further type of plug inserted into the socket 1, which comprises three rounded pins 400a, 400b and 400c. The pins 400a and 400b are in electrical connection with the electrical terminals 36a and 36b respectively. Similarly as above, with the pins fully and correctly inserted into the socket, the radiation is prevented from reaching the detectors and so power is supplied to the terminals. The third pin 400c is in electrical contact with a terminal 39c to serve as an earthing connection.

The above socket 1, finds particular, although not exclusive, application in the field of aircraft power supply, in which the sockets are provided adjacent to passenger seating in the aircraft cabin, to enable passengers to power their electrical devices. Advantageously, the socket 1 is capable of receiving the majority of different electrical plug types used in different regions of the world, thus obviating the need for the passenger to use a plug adapter. Further advantageously, the various components of the socket are arranged in a spatially efficient manner, thus leading to the socket being of compact dimensions making it particularly useful for space-limited environments such as passenger transportation.

When the socket is not in use, the shutters 4a and 4b being in the closed condition ensure that ingress of dust and fibres into the socket is prevented, thus ensuring that dust does not reside on any of the electrical terminals to ensure optimal electrical connection. The shutters 4a and 4b when in the closed condition, also prevent the ingress of liquid into the socket, forming a liquid barrier. When in the closed condition, the shutters prevent any background infrared (from a source external to the interior space of the socket) entering the socket and causing accidental trip.

In a passenger transportation environment, the socket 1 affords a high level of safety to passengers due to passenger, such as an infant, attempting to insert a metallic or other electrically conductive object into the socket. Since passengers could be spending long periods of time in the seat, there is an increased likelihood of a foreign object being attempted to be inserted into the socket. It will be appreciated that the socket would operate in combination with a suitable power supply that has an interlock input control line to further enhance safety levels.

Although mention has been made of application to aircraft, the socket could also be used in other forms of passenger transportation such as buses, coaches and trains.

In one embodiment of the invention, in addition to the predetermined output from the logic circuitry 171 being required to connect the power supply, it may also be required that an electrical loading check in relation to a circuit including the pins is also performed to ensure that the pins are present before supply power.

## Claims

1. An electrical socket (1) comprising a carriage, the carriage (4) comprising shutter portions (4a, 4b), each shutter portion associated with a respective pin receiving opening (5a, 5b), and the socket comprising a retainer arrangement (50), and the shutter portions, when in a closed condition are inhibited from moving to an open condition by the retainer arrangement, and wherein all the shutter portions are required to be in a released condition from the retainer arrangement in order to allow the shutter portions to be moved to an open condition to allow the plug pins to be inserted therein, and also wherein, if not all of the shutter portions are moved to a released condition, the shutter portions are inhibited from movement to the open condition by way of engagement with the retainer arrangement, wherein each shutter portion is displaceable in a first direction to the released condition, which direction is substantially perpendicular to a second direction in which each shutter portion is displaceable to the open condition, and in which the carriage comprises a connection piece (9) which connects the shutter portions together, and the connection piece has flexibility in the first direction to allow the shutter portions to move to the released condition independently of one another.

2. An electrical socket as claimed in claim 1 in which the retainer arrangement (50) comprises a respective retainer surface (40a, 40b) for each shutter portion.

3. An electrical socket as claimed in claim 1 in which the first direction is substantially parallel to the direction to which a plug pin is insertable into its opening.

4. An electrical socket as claimed in any preceding claim in which one or some of the shutter portions (4a, 4b) is/are capable of displacement to the released condition independently of the other shutter/remaining shutter portions such that urging of one or only some of the shutter portions to the released condition does not urge the other shutter portion(s) to the released condition.

5. An electrical socket as claimed in any preceding claim in which each shutter portion (4a, 4b) comprises inclined surfaces (15a, 15b) arranged to contact with respective distal ends of plug pins.

6. An electrical socket as claimed in any preceding claim in which the socket comprises a resilient biasing arrangement (21a, 21b) to urge the shutter portion towards the closed condition.

7. An electrical socket as claimed in any preceding claim in which the retainer arrangement (50) comprises a catch which is immovable with the socket housing.

## Patentansprüche

1. Elektrische Steckdose (1), die einen Schlitten umfasst, wobei der Schlitten (4) Verschlussteile (4a, 4b) umfasst, wobei jeder Verschlussteil mit einer jeweiligen Stiftempfangsöffnung (5a, 5b) assoziiert ist und wobei die Steckdose eine Halteanordnung (50) umfasst und wobei die Verschlussteile in einem geschlossenen Zustand durch die Halteanordnung daran gehindert sind, sich in einen geöffneten Zustand zu bewegen, und wobei es notwendig ist, dass sich sämtliche Verschlussteile in einem von der Halteanordnung freigegebenen Zustand befinden, um zu ermöglichen, dass die Verschlussteile in einen geöffneten Zustand bewegt werden, um zu ermöglichen, dass die Steckerstifte in diese eingeführt werden, und wobei auch, falls nicht sämtliche Verschlussteile in einen freigegebenen Zustand bewegt sind, die Verschlussteile mittels eines Eingriffs mit der Halteanordnung an einer Bewegung in den geöffneten Zustand gehindert werden, wobei jeder Verschlussteil in einer ersten Richtung in den freigegebenen Zustand verschiebbar ist, wobei diese Richtung im Wesentlichen senkrecht zu einer zweiten Richtung ist, in der jeder Verschlussteil in den geöffneten Zustand verschiebbar ist, und wobei der Schlitten ein Verbindungsstück (9) umfasst, dass die Verschlussteile miteinander verbindet und wobei das Verbindungsstück eine Flexibilität in der ersten Richtung aufweist, um zu ermöglichen, dass die Verschlussteile unabhängig voneinander in den freigegebenen Zustand bewegt werden.

2. Elektrische Steckdose nach Anspruch 1, wobei die Halteanordnung (50) eine jeweilige Halteoberfläche (40a, 40b) für jeden Verschlussteil umfasst.

3. Elektrische Steckdose nach Anspruch 1, bei der die erste Richtung im Wesentlichen parallel zu der Richtung ist, in der ein Steckerstift in ihre Öffnung einführbar ist.

4. Elektrische Steckdose nach einem vorhergehenden Anspruch, bei der einer oder manche der Verschlussteile (4a, 4b) unabhängig von den anderen Verschlussteilen/verbleibenden Verschlussteilen zu einer Verschiebung in den freigegebenen Zustand in der Lage ist/sind, so dass das Treiben eines oder nur mancher der Verschlussteile in den freigegebenen Zustand den/die anderen Verschlussteil(e) nicht in den freigegebenen Zustand treibt.

5. Elektrische Steckdose nach einem vorhergehenden Anspruch, bei der jeder Verschlussteil (4a, 4b) geneigte Oberflächen (15a, 15b) umfasst, die so angeordnet sind, dass sie die jeweiligen distalen Enden der Steckerstifte kontaktieren.

6. Elektrische Steckdose nach einem vorhergehenden Anspruch, wobei die Steckdose eine biegsame Vorspannungsanordnung (21a, 21b) umfasst, um den Verschlussteil zu dem geschlossenen Zustand hin zu treiben.

7. Elektrische Steckdose nach einem vorhergehenden Anspruch, bei der die Halteanordnung (50) einen Haken mit dem Steckdosengehäuse umfasst, der unbeweglich ist.

## Revendications

1. Prise électrique (1) comprenant un coulisseau, le coulisseau (4) comprenant des parties éclipse (4a, 4b), chaque partie éclipse étant associée à une ouverture de réception de broche (5a, 5b) respective, et la prise comprenant un agencement de retenue (50), l'agencement de retenue empêchant les parties éclipse, lorsqu'elles sont dans un état fermé, de se déplacer dans un état ouvert, et toutes les parties éclipse devant être dans un état libéré par rapport à l'agencement de retenue pour permettre le déplacement des parties éclipse dans un état ouvert pour y permettre l'insertion des broches de fiche, un retenue par l'agencement de retenue empêchant les parties éclipse de se déplacer dans l'état ouvert si les parties éclipse ne sont pas toutes déplacées dans un état libéré, chaque partie éclipse pouvant être déplacée dans une première direction dans l'état libéré, ladite direction étant sensiblement perpendiculaire à une seconde direction dans laquelle chaque partie éclipse peut être déplacée dans l'état ouvert, et le coulisseau comprenant une pièce de connexion (9) qui connecte ensemble les parties éclipse, la pièce de connexion ayant une certaine flexibilité dans la première direction pour permettre le déplacement des parties éclipse dans l'état libéré indépendamment l'une de l'autre.

2. Prise électrique selon la revendication 1, dans laquelle l'agencement de retenue (50) comprend une surface de retenue (40a, 40b) respective pour chaque partie éclipse.

3. Prise électrique selon la revendication 1, dans laquelle la première direction est sensiblement parallèle à la direction dans laquelle une broche de fiche peut être insérée dans son ouverture.

4. Prise électrique selon l'une quelconque des revendications précédentes, dans laquelle une ou plusieurs des parties éclipse (4a, 4b) est ou sont capables de se déplacer dans l'état libéré indépendant des autres parties éclipse ou des parties éclipse restantes, de sorte que le fait de pousser une ou seulement une partie des parties éclipse dans l'état libéré ne pousse pas la ou les autres parties éclipse dans l'état libéré.

5. Prise électrique selon l'une quelconque des revendications précédentes, dans laquelle chaque partie éclipse (4a, 4b) comprend des surfaces inclinées (15a, 15b) conçues pour entrer en contact avec des extrémités distales respectives de broches de fiche.

6. Prise électrique selon l'une quelconque des revendications précédentes, la prise comprenant un agencement de sollicitation élastique (21a, 21b) permettant de pousser la partie éclipse vers l'état fermé.

7. Prise électrique selon l'une quelconque des revendications précédentes, dans laquelle l'agencement de retenue (50) comprend un loquet qui est fixe avec le boîtier de prise.
